# EUROPÄISCHE PATENTANMELDUNG

(11) **EP 1 927 421 A2**
(43) Veröffentlichungstag der Anmeldung: **04.06.2008**
(21) Anmeldenummer: 07023190.7
(22) Anmeldetag: 30.11.2007
(51) Int. Cl.: B23K 1/008, F27D 1/00

(54) **Anlage und Verfahren zum Herstellen von gelöteten Bauteilen**

(30) Priorität: 01.12.2006 DE 102006057157
(71) Anmelder: Behr GmbH & Co. KG, 70469 Stuttgart (DE)
(72) Erfinder: Knödler, Wolfgang, 71332 Waiblingen (DE); Heeb, Wolfgang, 73614 Schorndorf (DE); Völker, Cord, 71522 Backnang (DE); Grünenwald, Bernd, 72622 Nürtingen (DE)

(57) **Zusammenfassung**

Die Erfindung betrifft eine Anlage und ein Verfahren zum Herstellen von gelöteten Bauteilen, insbesondere von Wärmeübertragern, aus Leichtmetall, insbesondere aus Aluminium-Werkstoffen, unter Schutzgas mit einem Durchlauflötofen oder einem Kammerlötofen, der als Muffel ausgeführt ist, die aus einem Muffelmaterial gebildet ist.

Um die Herstellung von gelöteten Bauteilen zu vereinfachen und zu verbessern, ist die Muffel, zumindest teilweise, aus einem speziellen Muffelmaterial gebildet, das mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmittein oder mit deutlich reduzierten Flussmittelmengen stoffschlüssig zu verlöten.

## Beschreibung

Die Erfindung betrifft eine Anlage und ein Verfahren zum Herstellen von gelöteten Bauteilen, insbesondere von Wärmeübertragern, aus Leichtmetall, insbesondere aus Aluminium-Werkstoffen, unter Schutzgas mit beziehungsweise in einem Durchlauflötofen oder in einem Kammerlötofen, der als Muffel ausgeführt ist, die aus einem Muffelmaterial gebildet ist.

Beim Löten von Aluminium können Flussmittel verwendet werden, um die Lötstellen zu reinigen. Bei der Verwendung von Flussmitteln gestaltet sich die Applikation oft sehr aufwendig und kostenintensiv. Darüber hinaus sind die Bauteile nach dem Löten mit Flussmitteln beaufschlagt, was bei der Verwendung von chloridischen Flussmitteln einen aufwendigen Reinigungsvorgang impliziert. Bei Verwendung von nicht korrosiven Flussmitteln ist diese Reinigung bei bestimmten Produkten nicht erforderlich. Jedoch ist deren Einsatzmöglichkeit durch das Produktdesign oder erhöhte Anforderungen an das Bauteil, insbesondere hinsichtlich Reinheit und Optik, eingeschränkt. Es ist auch möglich, Aluminium flussmittelfrei unter Vakuum zu verlöten. Zum Löten unter Vakuum sind jedoch technisch aufwendige und somit teuere Lötanlagen erforderlich. Die zu verlötenden Teile müssen absolut sauber sein, was nur durch eine kostenintensive Vorbehandlung zu gewährleisten ist.

Aufgabe der Erfindung ist, die Herstellung von gelöteten Bauteilen, insbesondere von Wärmeübertragern, aus Leichtmetall, insbesondere aus Aluminium-Werkstoffen, unter Schutzgas mit beziehungsweise in einem Durchlauflötofen oder in einem Kammerlötofen, der als Muffel ausgeführt ist, die aus einem Muffelmaterial gebildet ist, zu vereinfachen und zu verbessern.

Die Aufgabe ist bei einer Anlage zum Herstellen von gelöteten Bauteilen, insbesondere von Wärmeübertragern, aus Leichtmetall, insbesondere aus Aluminium-Werkstoffen, unter Schutzgas mit einem Durchlauflötofen oder in einem Kammerlötlofen, der als Muffel ausgeführt ist, die aus einem Muffelmaterial gebildet ist, dadurch gelöst, dass die Muffel, zumindest teilweise, aus einem speziellen Muffelmaterial gebildet ist, das mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmitteln oder mit deutlich reduzierten Flussmittelmengen stoffschlüssig zu verlöten. Das spezielle Muffelmaterial reagiert mit dem beziehungsweise bindet den im Betrieb im Ofeninnenraum befindlichen Restsauerstoff beziehungsweise mit entsprechenden sauerstoffhaltigen Verbindungen. Die Ofenmuffel kann sowohl vollständig als auch teilweise, das heißt zum Beispiel in Form von Auskleidungen (vollständig oder partiell), aus dem speziellen Muffelmaterial gebildet sein. Dadurch ist es möglich, den Sauerstoffgehalt, der in herkömmlichen Muffeln in der Regel im Bereich von 50 bis 500 ppm (parts per million) liegt, auf 5 bis 20 ppm zu reduzieren. Das hat zur Folge, dass es an der Oberfläche des Lötguts zu keiner den Lötvorgang, insbesondere die Benetzung der Aluminiumoberfläche mit Lot beeinträchtigenden Reoxidation kommt. Somit ist es möglich, ohne Verwendung von Flussmitteln stoffschlüssige Lötverbindungen zwischen Lötwerkstücken aus Aluminium, insbesondere Wärmetauschern, darstellen zu können.

Ein bevorzugtes Ausführungsbeispiel der Anlage ist dadurch gekennzeichnet, dass das spezielle Muffelmaterial unter Bildung von Kohlenmonoxid oder Kohlendioxid mit Sauerstoff oder mit sauerstoffhaltigen Verbindungen reagiert.

Ein weiteres bevorzugtes Ausführungsbeispiel der Anlage ist dadurch gekennzeichnet, dass das spezielle Muffelmaterial Graphit umfasst. Mit Graphit wurden im Rahmen der vorliegenden Erfindung die besten Ergebnisse erzielt.

Ein weiteres bevorzugtes Ausführungsbeispiel der Anlage ist dadurch gekennzeichnet, dass das spezielle Muffelmaterial Stahl und/oder Nickelwerkstoffe und/oder Aluminium-Schäume umfasst. Es ist möglich, herkömmliche Fertigungseinrichtungen ohne gravierende Modifikationen mit dem speziellen Muffelmaterial auszustatten. Die erfindungsgemäße Anlage weist deutlich längere Standzeiten als herkömmliche Fertigungseinrichtungen auf. Außerdem benötigt die erfindungsgemäße Anlage weniger Platz als herkömmliche Anlagen.

Ein weiteres bevorzugtes Ausführungsbeispiel der Anlage ist dadurch gekennzeichnet, dass das spezielle Muffelmaterial in einer Vorheiz- und Lötzone des Durchlauflötoferis angeordnet ist.

Die oben angegebene Aufgabe ist bei einem Verfahren zum Herstellen von gelöteten Bauteilen, insbesondere von Wärmeübertragern, aus Leichtmetall, insbesondere aus Aluminium-Werkstoffen, unter Schutzgas in einem Durchlauflötoten oder in einem Kammerlötofen, der als Muffel ausgeführt ist, die aus einem Muffelmaterial gebildet ist, dadurch gelöst, dass in der Muffel, also innerhalb der Muffel, ein Material angeordnet wird, das mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmitteln oder mit deutlich reduzierten Flussmittelmengen stoffschlüssig zu verlöten. Bei dem erfindungsgemäßen Verfahren wird ein Gegenstand innerhalb der Muffel angeordnet, der ein Material umfasst, das mit Sauerstoff oder mit sauerstoffhaltigen Verbindungen reagiert beziehungsweise diesen oder diese bindet. Das erfindungsgemäße Verfahren ist ohne großen technischen Aufwand als Alternative zum Löten mit nicht korrosiven Flussmitteln großtechnisch realisierbar. Mit dem erfindungsgemäßen Verfahren ist es möglich, den Sauerstoffgehalt, der in herkömmlichen Muffeln in der Regel im Bereich von 50 bis 500 ppm (parts per million) liegt, auf 5 bis 20 ppm zu reduzieren. Das hat zur Folge, dass es an der Oberfläche des Lötguts zu keiner den Lötvorgang, insbesondere die Benetzung der Aluminiumoberfläche mit Lot beeinträchtigenden Reoxidationen kommt. Somit ist es möglich, ohne Verwendung von Flussmitteln stoffschlüssige Lötverbindungen zwischen Lötwerkstücken aus Aluminium, insbesondere Wärmetauschem, darstellen zu können.

Beim so genannten Nocolok-Löten werden normalerweise Aluminiumlegierungen mit Magnesiumgehalten verwendet, die kleiner oder gleich 0,3 Prozent sind. Mit dem erfindungsgemäßen Verfahren lassen sich in vorteilhafter Weise auch Aluminiumwerkstoffe mit höheren Magnesiumgehalten als 0,3 Prozent, das heißt höherfeste Aluminiumlegierungen, fertigungssicher verlöten.

Ein bevorzugtes Ausführungsbeispiel des Verfahrens ist dadurch gekennzeichnet, dass das Material unter Bildung von Kohlenmonoxid oder Kohlendioxid mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmitteln oder mit deutlich reduzierten Flussmittelmengen stoffschlüssig zu verlöten. Bei dem Material handelt es sich vorzugsweise um Graphit.

Ein weiteres bevorzugtes Ausführungsbeispiel des Verfahrens ist dadurch gekennzeichnet, dass magnesiumhaltige Kern- beziehungsweise Plattierwerkstoffe verlötet werden.

Ein weiteres bevorzugtes Ausführungsbeispiel des Verfahrens ist dadurch gekennzeichnet, dass Aluminium-Grundwerkstoffe mit bis zu 1 Prozent Magnesium verlötet werden, insbesondere mit bis zu 2 Prozent Magnesium verlötet werden.

Ein weiteres bevorzugtes Ausführungsbeispiel des Verfahrens ist dadurch gekennzeichnet, dass Aluminium-Silizium-Basis-Werkstoffe, insbesondere Aluminium-Sizilium-Basis-Lacke, insbesondere dass Aluminium-Silizium-Lotwerkstoffe mit bis zu 2 Prozent Magnesium verwendet werden.

Ein weiteres bevorzugtes Ausführungsbeispiel des Verfahrens ist dadurch gekennzeichnet, dass Hilfsvorrichtungen, wie zum Beispiel Lötgestelle, Unterlagen, Abdeckungen, zum Beispiel aus Graphit ausgeführt sind, und somit Sauerstoff-reduzierende Werkstoffe über den normalen Fertigungsprozess in unveränderte, das heißt Standard-Lötöfen, eingebracht werden.

Ein weiteres bevorzugtes Ausführungsbeispiel des Verfahrens ist dadurch gekennzeichnet, dass beim Durchlauflötprozess Sauerstoff-reduzierendes Material, insbesondere z.B. als Spannungsgestelle, mit dem Lötgut den Prozess durchläuft. Hierbei lässt sich neben der Verringerung des Sauerstoffanteils durch Reaktion mit dem Material (vorzugsweise Graphit, insbesondere Kohlefaser verstärkter Graphit) eine Verringerung über eine optimierte Ofenbeladung erzielen.

Weitere Vorteile, Merkmale und Einzelheiten der Erfindung ergeben sich aus der nachfolgenden Beschreibung, in der verschiedene Ausführungsbeispiele im Einzeinen beschrieben sind. Dabei können die in den Ansprüchen und in der Beschreibung erwähnten Merkmale jeweils einzeln für sich oder in beliebiger Kombination erfindungswesentlich sein.

Bei der erfindungsgemäßen Anlage handelt es sich um eine Anlage zum Herstellen von gelöteten Wärmeübertragern aus Aluminium-Werkstoffen. Das Verlöten erfolgt unter Schutzgas in einem Durchlauflötofen oder in einen Kammerlötofen, der als Muffel ausgeführt ist. Durch den Einsatz von bestimmten Muffelmaterialien für den Durchlauflötofen beziehungsweise Kammerlötofen, insbesondere durch die Verwendung von Graphit, wird die Lötatmosphäre verbessert und somit eine unerwünschte Reoxidation von Aluminium verhindert.

Vorzugsweise umfasst das in der Vorheiz- und Lötzone befindliche Ofenmuffelmaterial Graphit. Das Ofenmuffelmaterial reagiert mit dem im Ofeninnenraum befindlichen Restsauerstoff beziehungsweise sauerstoffhaltigen Verbindungen unter Bildung von insbesondere Kohlenmonoxid und/oder Kohlendioxid.

Die Ofenmuffel kann sowohl vollständig als auch teilweise, das heißt zum Beispiel in Form von Auskleidungen (vollständig oder partiell), aus dem mit Restsauerstoff beziehungsweise sauerstoffhaltigen Verbindungen reagierenden Material aufgebaut sein.

Des Weiteren ist es auch möglich, einen Körper aus mit Sauerstoff (O₂) reagierenden Materialien im Ofeninnenraum, insbesondere in der Vorheiz- und Lötzone, einzusetzen. Dadurch wird der Sauerstoffgehalt, der in herkömmlichen Durchlauflötöfen mit Muffeln in der Regel im Bereich von 50 bis 500 ppm liegt, auf 5 bis 20 ppm abgesenkt.

Das hat zur Folge, dass es an der Oberfläche des Lötguts zu keiner den Lötvorgang, insbesondere die Benetzung der Aluminiumoberfläche mit Lot beeinträchtigenden Reoxidation kommt. Somit ist es möglich, ohne Verwendung von Flussmitteln stoffschlüssige Lötverbindungen zwischen Lötwerkstücken aus Aluminium, insbesondere Wärmetauschern, darstellen zu können.

Gemäß der vorliegenden Erfindung können die Herstellkosten für Wärmeübertrager aus Aluminium-Werkstoffen deutlich reduziert werden. Das ist unter anderem auf den Wegfall des Befluxens zurückzuführen. Dabei sind nicht nur die wegfallenden Fluxkosten zu berücksichtigen. Zusätzlich können die Anlagenkosten reduziert werden. Außerdem kann eine ansonsten erforderliche Sondermüllentsorgung entfallen. Die erfindungsgemäße Lösung kann ohne gravierende Modifikationen in bestehenden Fertigungseinrichtungen realisiert werden. Gemäß der vorliegenden Erfindung können wesentlich längere Standzeiten der Fertigungseinrichtungen, insbesondere der Ofenmuffel, erreicht werden. Außerdem benötigt die erfindungsgemäße Anlage weniger Platz als herkömmliche Anlagen. Mit dem erfindungsgemäßen Verfahren können magnesiumhaltige Werkstoffe mit einer höheren Festigkeit verlötet werden. Dadurch können die Wanddicken gegenüber herkömmlichen Bauteilen reduziert werden.

## Patentansprüche

1. Anlage zum Herstellen von gelöteten Bauteilen, insbesondere von Wärmeübertragern, aus Leichtmetall, insbesondere aus Aluminium-Werkstoffen, unter Schutzgas mit einem Durchlauflötofen oder einem Kammerlötofen, der als Muffel ausgeführt ist, die aus einem Muffelmaterial gebildet ist, **dadurch gekennzeichnet, dass** die Muffel, zumindest teilweise, aus einem speziellen Muffelmaterial gebildet ist, das mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmitteln oder mit deutlich reduzierten Flussmittelmengen stoffschlüssig zu verlöten.

2. Anlage nach Anspruch 1, **dadurch gekennzeichnet, dass** das spezielle Muffelmaterial unter Bildung von Kohlenmonoxid oder Kohlendioxid mit Sauerstoff oder mit sauerstoffhaltigen Verbindungen reagiert.

3. Anlage nach einem der vorhergehenden Ansprüche, **dadurch gekennzeichnet, dass** das spezielle Muffelmaterial Graphit umfasst.

4. Anlage nach einem der vorhergehenden Ansprüche, **dadurch gekennzeichnet, dass** das spezielle Muffelmaterial Stahl und/oder Nickelwerkstoffe und/oder Aluminiumschäume umfasst.

5. Anlage nach einem der vorhergehenden Ansprüche, **dadurch gekennzeichnet, dass** das spezielle Muffelmaterial in einer Vorheiz- und Lötzone des Durchlauflötofens oder des Kammerlötöfens angeordnet ist.

6. Verfahren zum Herstellen von gelöteten Bauteilen, insbesondere von Wärmeübertragern, aus Leichtmetall, insbesondere aus Aluminium-Werkstoffen, unter Schutzgas in einem Durchlauflötofen oder in einem Kammerlötofen, der als Muffel ausgeführt ist, die aus einem Muffelmaterial gebildet ist, **dadurch gekennzeichnet, dass** in der Muffel ein Material angeordnet wird, das mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmitteln oder mit deutlich reduzierten Flussmittelmengen stoffschlüssig zu verlöten.

7. Verfahren nach Anspruch 6, **dadurch gekennzeichnet, dass** das Material unter Bildung von Kohlenmonoxid oder Kohlendioxid mit Sauerstoff oder mit sauerstoffhaltigen Verbindungen reagiert beziehungsweise Sauerstoff oder sauerstoffhaltige Verbindungen bindet, um Bauteile aus Leichtmetall, insbesondere aus Aluminiumwerkstoffen, ohne Verwendung von Flussmitteln oder mit deutlich reduzierten Flussmittelmengen stoffschlüssig zu verlöten.

8. Verfahren nach Anspruch 6 oder 7, **dadurch gekennzeichnet, dass** magnesiumhaltige Kern- beziehungsweise Plattierwerkstoffe verlötet werden.

9. Verfahren nach einem der Ansprüche 6 bis 8, **dadurch gekennzeichnet, dass** Aluminium-Grundwerkstoffe mit bis zu 1 Prozent Magnesium, insbesondere mit bis zu 2 Prozent Magnesium, verlötet werden.

10. Verfahren nach einem der Ansprüche 6 bis 8, **dadurch gekennzeichnet, dass** Aluminium-Silizium-Basis-Werkstoffe, insbesondere Alumirlium-Sizilium-Basis-Lacke, insbesondere Aluminium-Sizilium-Lotwerkstoffe, mit bis zu 2 Prozent Magnesium verwendet werden.

11. Verfahren nach einem der Ansprüche 6 bis 10, **dadurch gekennzeichnet, dass** Hilfsvorrichtungen, wie zum Beispiel Lötgestelle, insbesondere Spannungsgestelle, Unterlagen, Abdeckungen, insbesondere aus Graphit, insbesondere aus Kohlefaser verstärktem Graphit, ausgeführt sind, und somit O₂ reduzierende Werkstoffe über den normalen Fertigungsprozess in unveränderte, das heißt Standard-Lötöfen, eingebracht werden.

12. Verfahren nach einem der Ansprüche 6 bis 10, **dadurch gekennzeichnet, dass** beim Durchlauflötprozess O₂-reduzierendes Material mit dem Lötgut den Prozess durchläuft.
